# EUROPEAN PATENT SPECIFICATION

(11) **EP 1 593 610 B1**
(45) Date of publication and mention of the grant of the patent: **23.08.2006**
(21) Application number: 04010923.3
(22) Date of filing: 07.05.2004
(51) Int. Cl.: B65D 81/03, H01F 1/44

(54) **A casing for an object, and a method of operating the casing**
Verpackung für einen Gegenstand, sowie ein Verfahren zur Steuerung der Verpackung
Emballage pour un objet, et un procédé d'utilisation de l'emballage

(43) Date of publication of application: 09.11.2005
(73) Proprietor: SIEMENS AKTIENGESELLSCHAFT, 80333 München (DE)
(72) Inventor: Santa Cruz, Carmen, 9000 Aalborg (DK)

(56) References cited:
- EP-A- 1 170 225
- US-A- 5 810 640
- US-A1- 2002 000 533
- US-B1- 6 176 613

## Description

### Field of the invention

The invention relates to a casing suitable for at least partially covering an object, to an object comprising such a casing, and to a method relating to the same (EP 1 170 225 A).

### Background of the invention

An object is usually protected with a protective casing if extra protection is needed for it. The protective casing may be of relatively hard or fibrous material (e.g. cardboard box), of elastic material (e.g. plastic foil wrapper), or of material filled with gas (e.g. plastic bubble wrapper).

On one hand, the better protecting characteristics are required, the more robust a casing has to be. On the other hand, a robust casing may be aesthetically very unappealing or hinder the use of the object. For this reason, the casing must in some cases be removed before the object may be used. This may result in double packaging: a mobile handset, for example, usually comprises a casing of hard plastics for protecting the electronic circuitry and other parts of the mobile handset. The mobile handset is nevertheless sold to a customer packed into a cardboard box. Whereas the casing of hard plastics (i.e. casing for the electronic circuitry and other parts of the mobile handset) usually does not prohibit the use of the mobile handset, it does not provide adequate protection either, for example, against scratches or mechanical shocks, at least for itself. Thus the cardboard box has its own function to fulfill.

A problem in the state-of-the-art casings is therefore that they do not perform well enough for the different purposes of protecting an object and enabling its comfortable use.

### Summary of the invention

A first objective of the invention is to bring out a casing suitable for at least partially covering an object that solves the problem mentioned above, i.e. performs well for the different purposes of protecting an object and enabling its comfortable use. The first objective can be achieved as set out in independent claim 1. Advantageous embodiments of the first objective of the invention are set out in dependent claims 2 to 7.

A second objective of the invention is to bring out an object comprising a casing suitable for at least partially covering the object, performing well for the different purposes of protecting the object and enabling its comfortable use. This object can be achieved as set out in claim 8. Dependent claims 9 to 15 describe various advantageous embodiments of the second objective of the invention.

A third objective of the invention is to bring out a method, especially as a computer program to be executed in a processor, for controlling a casing or an object according to the first and second objectives of the invention. This can be achieved as set out in claim 16.

### Advantages of the invention

If a casing comprises an elastic outer layer, a second layer under the elastic outer layer, a support structure under the second layer, and means for changing a viscoelastic property of the second layer in response to a control signal, the usability of the casing may be improved. For example, with a first suitably selected viscoelastic property, relatively good protection characteristics may be obtained, while with a second viscoelastic property, problems resulting from the robustness or rigidity of the casing may be avoided.

If an object comprises a casing like that of above, then simply by changing a viscoelastic property of the casing, the casing can be adapted to protect the object or to enable comfortable use of the object. In other words, the problem of removing a casing or possibly replacing it with another one can be avoided.

If the second layer comprises blobs, a viscoelastic property of which can be changed, better protective characteristics can be obtained. Surface tension or shear resistance of the individual blobs cumulates, and with a first viscoelastic property, the blobs may therefore provide better shock absorption characteristics. With a second viscoelastic property, the thinner material between the blobs may provide enhanced flexibility.

If the method is adapted to carry out the step of specifying a time limit for restoring a casing into a normal state, the user does not manually initiate the restoring of the casing back to the normal state but this can be automatized.

If a shaking intensity for restoring a casing into a normal state is specified, the manual effort for restoring the casing to a normal state by shaking can be adjusted suitably for different user needs and wishes.

If the generation of a control signal for changing the casing to a normal state or to a special state is disabled, the non-intented and surprising changing of state may be avoided.

If a threshold acceleration for changing a casing into a shock-absorbing state is specified, by comparing the actual acceleration with the threshold acceleration, the changing of the casing into a shock-absorbing state can be triggered in response to the actual acceleration exceeding the threshold acceleration. By doing so, an acceleration-triggered state change of the casing can be realized in such a manner that the state of the casing changes in the event that larger impulses are present or are going to be present, which may imply that more protection will be needed.

If a viscoelastic property of a casing for enabling using it or an object is changed in response to a command received from a network element or a sales agent, the object or the casing can be stored e.g. in a shop, for sales or delivery, in a "protected" state, and when the sales or delivery of the object or casing is effected, by sending a command, the object or the casing can be set to a normal state. This reduces the harm possibly caused by shoplifters since the casing cannot be used with the object if the casing is originally in the protected state and changing it to normal state is not allowed without the command from the network element or from the sales agent.

### Short description of Figures

In the following, the various embodiments of the invention are described in more detail with reference to the appended drawings in Figures 1A to 9, of which:
- Figure 1A: shows a perspective view of a casing in accordance to the invention;
- Figures 1B-1D: show three sections of the casing of Figure 1A;
- Figure 2: shows a more detailed section of a possible layer structure of a casing in accordance with a first embodiment of the invention using a changing electronic field;
- Figure 3A: shows a more detailed section of a possible layer structure of a casing in accordance with a second embodiment of the invention using a changing magnetic field;
- Figure 3B: shows a section of casing according to the second embodiment of the invention using a changing magnetic field;
- Figure 4: shows a first bubble structure of a casing;
- Figure 5: shows a second bubble structure of a casing;
- Figure 6A: shows a first object;
- Figure 6B: shows a casing for the first object;
- Figure 7A: illustrates a second object;
- Figure 7B: illustrates some components in the second object;
- Figure 7C: shows a casing for the second object;
- Figure 8: illustrates a user interface for a computer program; and
- Figure 9: illustrates an object in communication with a network element in a communications network, or a sales agent, in order to change the status of the casing of the object.

Same reference numerals refer to similar structural elements throughout the Figures.

### Detailed description of the invention

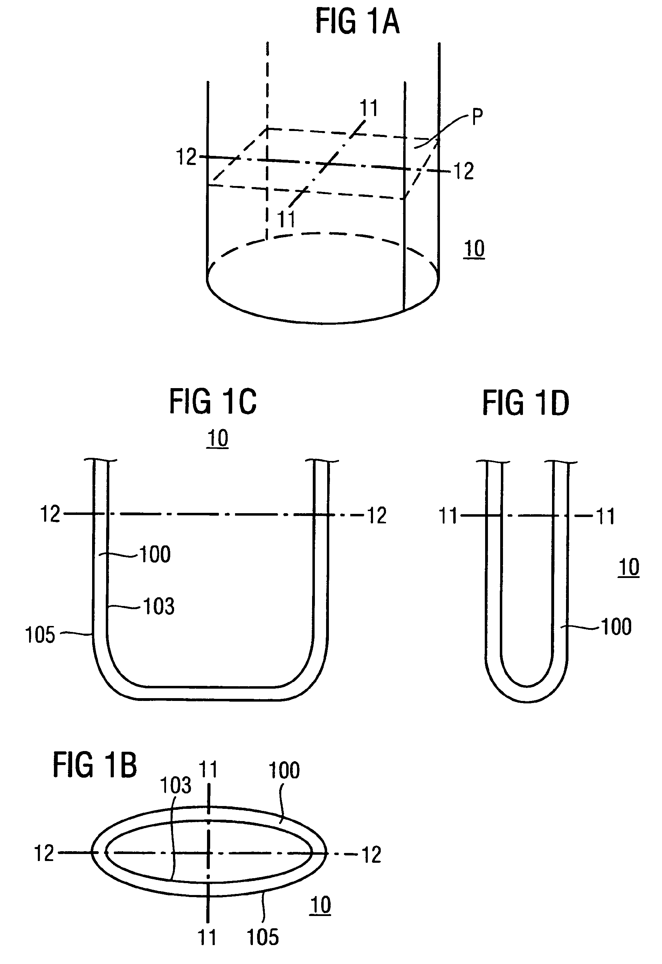

Figure 1A shows a perspective view of a casing 10 in accordance with the invention. A casing 10 is an object that can be used to cover another object and to protect it.

Figures 1B-1D show three sections of the casing 10: The section in Figure 1B is in the plane P of Figure A, and the sections in Figures 1D and 1C are in directions 11-11 and 12-12, respectively, as shown in Figure 1A.

As can be seen in Figure 1B, the casing 10 has an inner surface 103 and an outer surface 105, between which the interior 100 of the casing 10 is. The object which the casing 10 is supposed to protect is set inside the inner surface 103 of the casing 10, e.g. by wrapping or pulling the casing 10 at least partially over the object.

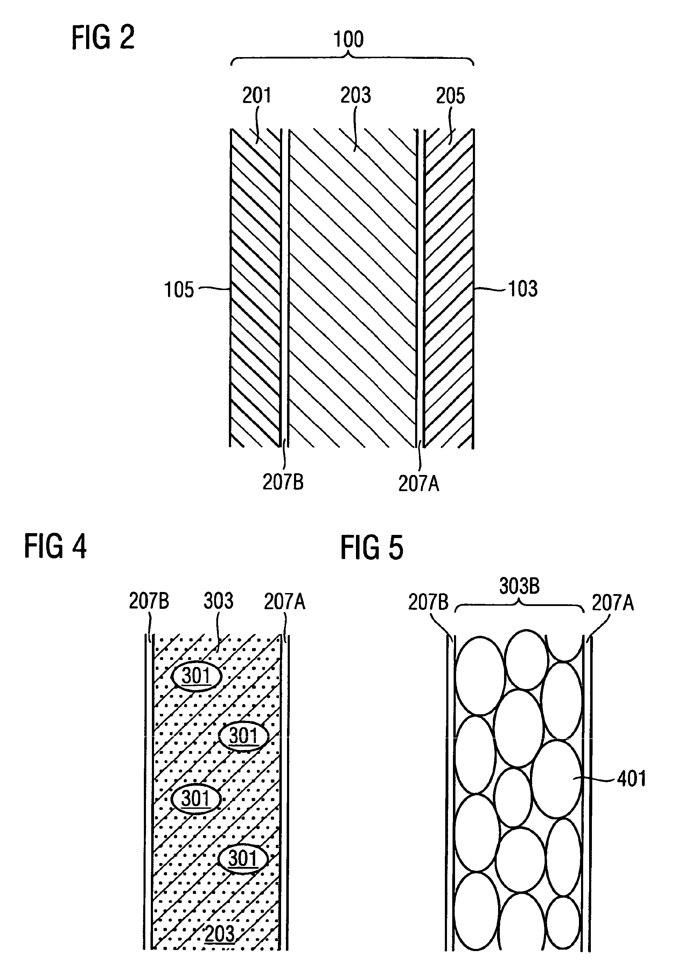

Figure 2 shows a more detailed section of a possible layer structure of the casing 10.

The casing 10 comprises an elastic outer layer 201, a second layer 203 under the elastic outer layer 201, and a support structure 205 under the second layer 203.

The casing further comprises means 207A, 207B for changing a viscoelastic property of the second layer 203 in response to a control signal.

Indeed, there are several possibilities for changing the viscoelastic property of the second layer 203, depending on the choice of the material for the second layer 203.

The simplest possibility would be to use a material that is fluid at a first temperature, and solid at a second temperature (e.g. water and ice). Alternatively, a material that changes its elasticity as a function of temperature, such as mineral oil, could be used. A practical problem for selecting one of these alternatives is that the changing of the viscoelastic property takes some time. If the application is nevertheless not critical in its requirements for time characteristics, then the means 207A, 207B for changing a viscoelastic property of the second layer 203 may comprise means for controlling temperature.

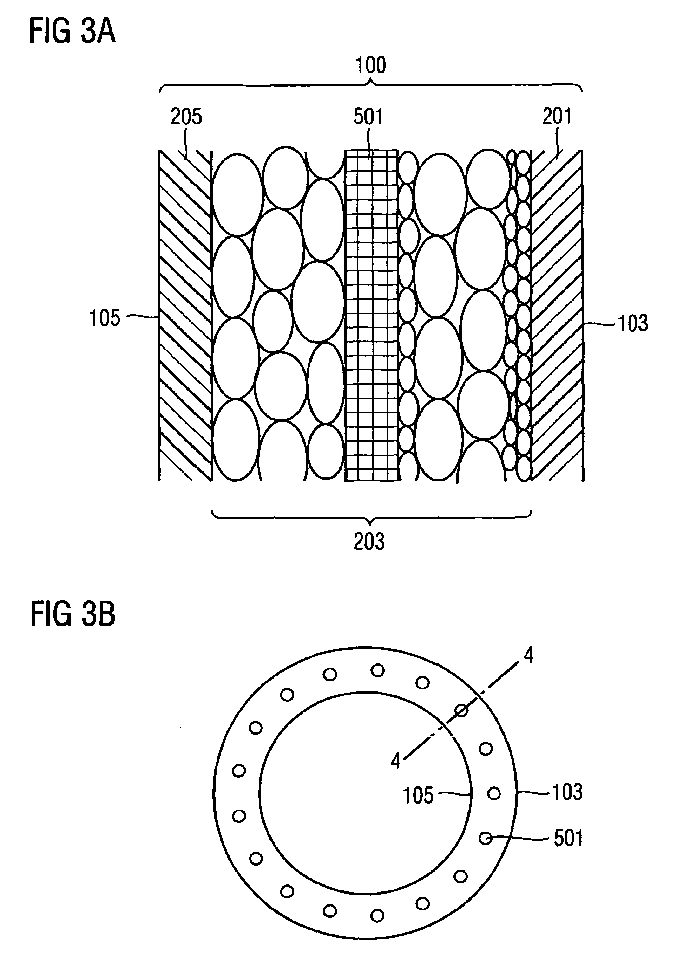

For the sake of simplicity, in the following discussion, two preferred embodiments for carrying out the invention are explained. In the first embodiment, as shown in Figure 2, the changing of the viscoelastic property is caused by a changing electric field. In the second embodiment, shown in Figure 3, the changing of the viscoelastic property is caused by a changing magnetic field.

In general, covering all embodiments of the invention, "viscoelastic property" is definited as a change in viscosity or in elasticity. "Normal state" denotes a state with high viscosity or elasticity. "Protecting state" denotes a state with low viscosity or elasticity. The actual values of elasticity or viscocity are selected depending upon the use or purpose of the casing 10. In particular for some polymers, their elasticity in itself is of a viscoelastic nature, which is thereby also understood to be covered by the definition of the viscoelastic property.

In Figure 2, each means 207A, 207B for changing a viscoelastic property of the second layer 203 comprises a sheet of conducting material. The conducting sheets are aimed for setting up an electric field in the space between them, like a capacitor comprising two plates. On one hand, the sheets are preferably very thin, the thickness depending on the use of the casing. On the other hand, the thicker the sheets are, the more the capacitor formed by the sheets can be charged, therefore enabling larger electric fields.

Instead of using a sheet of conducting material, a grid-like element of conducting material, or an element comprising a number of strips of conducting material can be used.

The second layer 203 may comprise electro-rheological fluid, the viscoelastic property of which changes in response to a changing electric field between the sheets of conducting material. The properties that change and some background can be found in Emerging Technologies Outlook Program, Ch. 2, "Smart Materials". Some examples of electric field sensitive elastomers can be found in "Intelligent Soft Materials" by Miklós Zrinyi, and in references therein.

Figure 3A shows a more detailed section of a possible layer structure of the casing 10 according to the second embodiment of the invention. The second layer 203 comprises magneto-rheological fluid, magnetic elastomer, or magnetic gel. Examples and properties of some such materials are discussed in "Intelligent Soft Materials". Further references for the materials and some design aspects, such as dimensioning of the magnetic fields, or strength of materials, can be found in "Optimal Design of MR Dampers", by Gavin *et al*., in "Commercial Magneto-Rheological Fluid Devices" by Carlson *et al*., and in "Compression Studies of Magneto-Rheological Fluid Filled Foams", by Desmukh *et al.*

Figure 3A shows further that an inductor 501, such as a coil, is located inside the second layer 203. In the example of Figure 3A, the second layer 203 consists of small bubbles. The bubbles may be of substantially same size (shown on the left side), or smaller either close to the coil or to the boundary (shown on the right side). The effect of the different sizes is that smaller bubbles provide a larger surface are per unit volume which effects in a larger surface tension for shock absorption and improved bending properties, for example.

Figure 3B shows a section of casing 10 of Figure 3A, the directions as shown in Figure 1B. The casing 10 comprises a number of inductors 501 in order to provide a strong enough magnetic field for changing a viscoelastic property of the second layer 203.

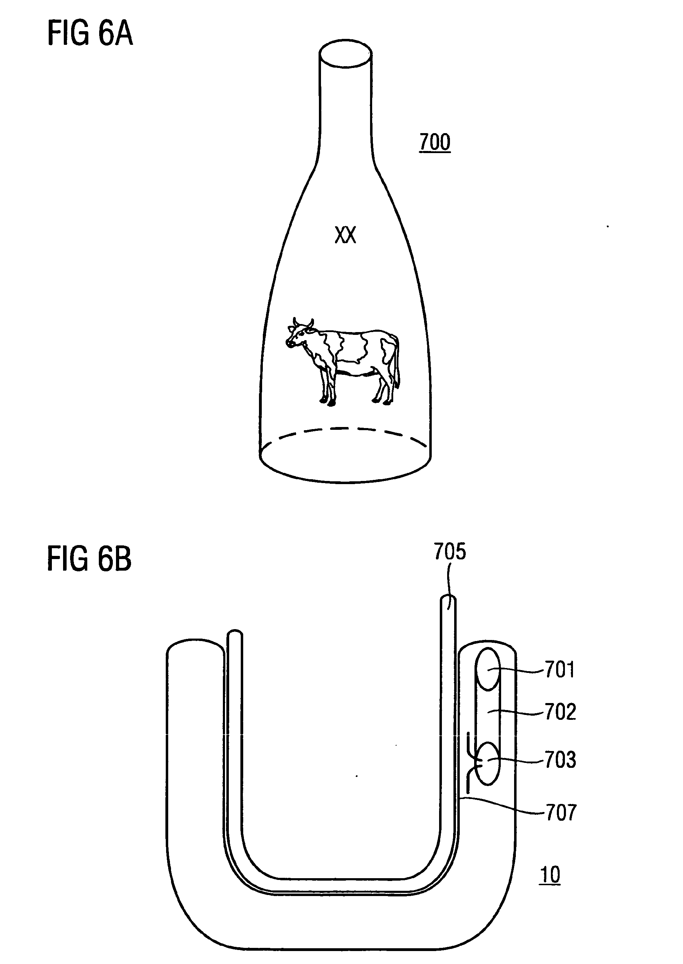

Figures 4 and 5 show alternative embodiments of the second layer 203 shown in Figure 2. The second layer 303 or 303B is then between the means 207A, 207B for changing a viscoelastic property of the second layer 203, e.g. between two sheets of conducting material.

According to one aspect of the present invention which applies for all embodiments shown in Figs 2, 4 and 5, the means 207A, 207B for changing a viscoelastic property of the second layer 203 can have the function of layers 201 and 205, having a consequence that there is no need for a separate elastic outer layer 201 nor support structure 205. Especially advantageous would then be to use a thin aluminum or copper foil as as means 207A, 207B for changing a viscoelastic property of the second layer 203.

Figure 4 shows a first bubble structure of a casing 10. The second layer 303 of the casing 10 may comprise a number of bubbles 301. The means 207A, 207B for changing a viscoelastic property of the second layer 203 are adapted to change a viscoelastic property of the bubbles. In Figure 4 the means 207A, 207B for changing the viscoelastic property are conductive plates, but as discussed above, other embodiments are possible, and instead of or in addition to changing an electric field, a magnetic field can be changed. The material 303 between the bubbles 301 is electrically insulating 303 or has good magnetic permeability, depending on the needs for the actual implementation.

Figure 5 shows a second bubble structure of a casing 10. Now the bubbles 401 fill the space between means 207A, 207B for changing the viscoelastic property, such as the conductive plates as discussed above. In other words, the second layer 303B may wholly consist of such bubbles.

Figure 6A shows a first object 700. The object 700 can be any object, but the invention is especially advantageous when the object is easily breakable. A glass bottle for storing a precious liquid is an example of the best kind.

Figure 6B shows a casing 10 for the object 700. The casing 10 may optionally comprise an elastic inner layer 705 for providing a tight fit between the object 700 and the casing 10.

Furthermore, the casing 10 may comprise means 701, such as a switch, for receiving a control signal, for switching the operating mode of the casing 10 on or off. In this manner the casing 10 may receive instructions from the object 700. A good example is that the casing 10 is in normal mode when the cork of the bottle is open and in the closed mode when the cork is placed back to the neck of the bottle.

The means 701 for receiving a control signal may be operable by the user, e.g. with a hand movement.

If the casing 10 is switched off, preferably by toggling a switch 701, it changes to a normal (more elastic) mode and can be easily removed from the object 700.

If the casing 10 is switched on, preferably by toggling a switch 701, it changes to a protecting (less elastic) mode and protects the object 700.

The casing 10 may comprises means 702; 703 for generating the control signal. In this case, the changing of the mode can be performed so that a three-position switch toggles connects a power source 702, such as a battery, through an inner connector 703 via electric conductors 707, such as a wiring, to the means 207A, 207B for changing a viscoelastic property of the second layer 203.

The inner connector 703 may comprise means for switching the direction of the electric field responsive to the switch 701.

The inner connector 703 may comprise means for causing an active current voltage if the second layer 203 is responsive to a changing magnetic field.

The changing of the mode can also cause a change in an optical property of the casing. This changing of the optical property, e.g. colour or transparency, may be carried out by using one more more layers of an electro-chromic material. The changing of the optical property may be used to signal the actual state of the casing to the user. The changing of the optical property may further involve a timer. For example, when the bottle has been open for too long a time, in order to save some of the precious content of the bottle from vaporization or from being overwhelmingly consumed, the casing 10 may turn from black to green when the bottle is opened, and after a predefined time (e.g. 5 minutes) from green to red. When the cork is replaced, the casing 10 turns back to black.

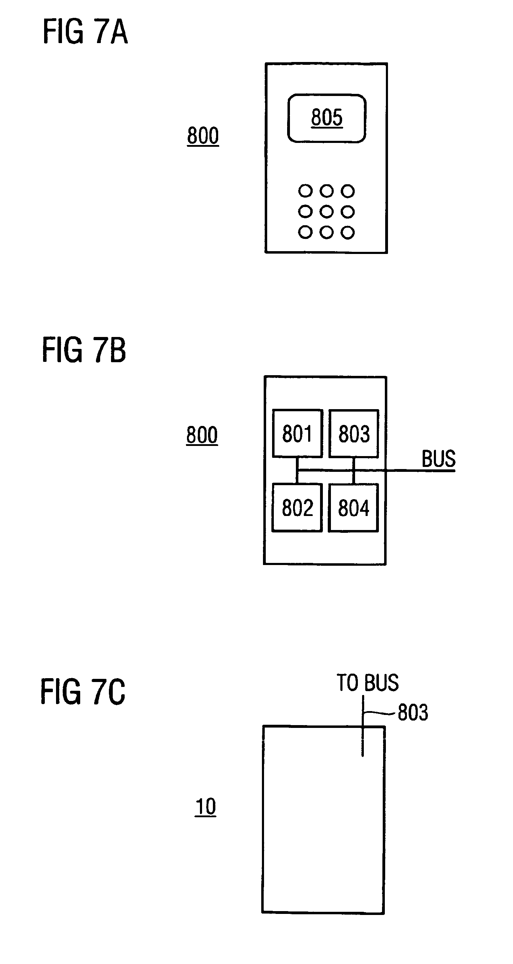

Figure 7A illustrates a second object 800 as seen from outside. The object 800 is an electronic device, such as a mobile terminal, a PDA device, or an MP3/CD player. The object 800 may thus comprise a display 805 and input means, such as a keypad.

Figure 7B illustrates some components within the object 800. The object 800 has a processing unit 801 and communication means 802, such as Radio Frequency RF or Infra-Red communication means. Examples of RF communication means include BLUETOOTH or cellular communication means, such as those suitable for receiving GSM, UMTS, or CDMA-traffic. Furthermore, the object 800 comprises a power source 803, and means 804 for changing a viscoelastic property of the second layer 203 of casing 10. The means 804 for changing a viscoelastic property of the second layer 203 can be connectable to the casing 10 either directly or via a messaging bus.

Figure 7C shows a casing 10 for the second object 800. The casing 10 is connectable to means 804 for changing a viscoelastic property either directly or via a messaging bus.

The processing unit 801 may comprise a computer program adapted to control means 804 for changing a viscoelastic property of the second layer 203.

The object 800 may be adapted to control a visual property of the casing 10 as discussed above regarding the first embodiment. To enable this, the casing 10 comprises material the visual property of which can be changed, and either the object 800 or the casing 10, or both, comprise means for changing said visual properyty.

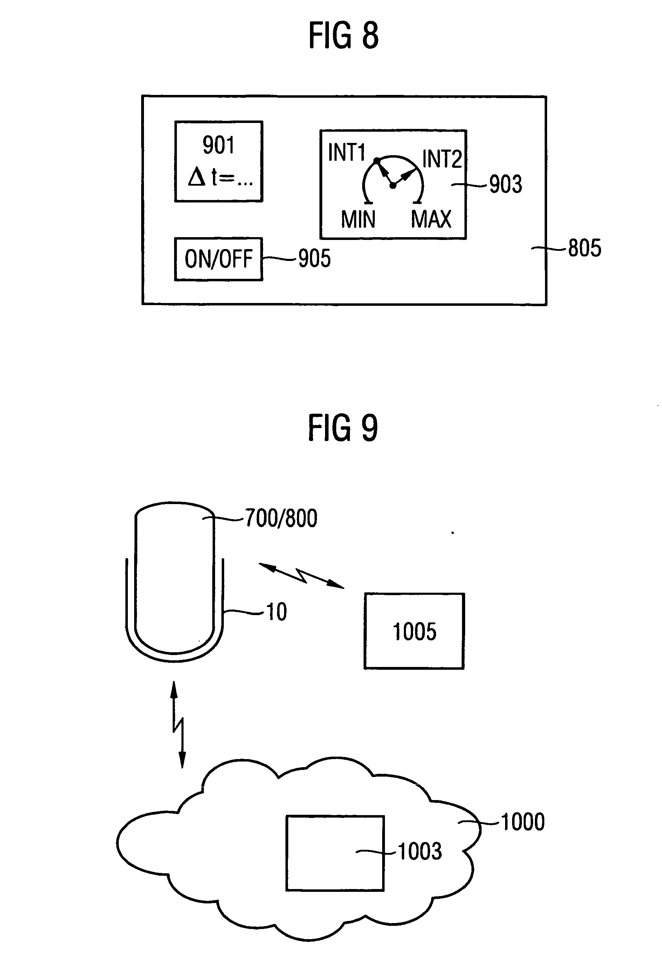

Figure 8 illustrates a possible user interface for the computer program. The user interface may comprise a) means 901 for specifying a time limit Δt for restoring the casing 10 into a normal state; b) means 903 for specifying a shaking intensity INT1 for restoring the casing 10 into a normal state; c) means 905 for enabling ("ON") or disabling ("OFF") the generation of the control signal; and/or d) means 903 for specifying a threshold acceleration INT2 for changing the casing 10 into a protecting state.

Figure 9 illustrates an object 700 or 800 in communication with a network element 1003 in a communications network 1000, or a sales agent 1005, in order to change the status of the casing of the object. The connection between the object 700/800 and sales agent 1005 takes preferably place over a local communication channel, such as Infra-Red or BLUETOOTH. The connection between the object 700/800 and a network element 1003 takes preferably place over a long-distance communication channel, especially over a RF communications channel, such as used in a cellular radio network.

The computer program may be responsive to a command received from a network element 1003 of a communications network 1000, or a sales agent 1005, and adapted to change a viscoelastic property of a casing 10 for enabling using the object 700, 800. Furthermore, the computer program may be responsive to a command received from a network element 1003 or a sales agent 1005 for changing the object 700, 800 to a state that permits the use of the object 700, 800 with a casing 10. In this manner, it is also possible to enable the subscriber to request the network operator to set the casing 10 to a mode disabling the using of the object 700, 800 e.g. in the case of theft.

Even though the example of the method has been described in connection of an embodiment including a computer program, the way in which the method actually is carried out can be freely selected from all suitable and available means and techniques.

## Claims

1. A casing (10) for at least partially covering an object (700, 800), comprising:
- an elastic outer layer (201);
- a second layer (203) under the elastic outer layer (201);
- a support structure (205) under the second layer (203); and
- means (207A, 207B; 501) for changing a viscoelastic property of the second layer (203) in response to a control signal.

2. A casing (10) of claim 1, **wherein:** the second layer (203) comprises blobs (301; 401), a viscoelastic property of which can be changed.

3. A casing (10) of claim 1 or 2, **wherein:** the means (207A, 207B; 501) for changing a viscoelastic property of the second layer (203) are adapted to change at least a part of the second layer (203) from a geleous state to a solid state, or from a solid state to a geleous state.

4. A casing (10) according to any one of the preceding claims, **wherein:** said casing (10) is removable and comprises means (701; 803) for receiving the control signal.

5. A casing (10) according to any one of the preceding claims, **wherein:** said casing (10) comprises means (702; 703) for generating the control signal.

6. A casing (10) according to any one of the preceding claims, **wherein:** the material of the second layer (203) comprises electro-rheological fluid, in particular electric field sensitive elastomer.

7. A casing (10) according to any one of the preceding claims 1 to 5, **wherein:** the material of the second layer (203) comprises magneto-rheological material, magnetic elastomer, or magnetic gel.

8. An object (700, 800), **comprising:** a casing (10) according to any one of the preceding claims.

9. An object (700, 800) of claim 8, further **comprising:** means (701, 702, 703, 707; 801, 802, 803, 804) for generating a control signal for changing a viscoelastic property of the second layer (203) of the casing (10).

10. An object (700, 800) of claim 9, **wherein:** said means () for generating the control signal are responsive to acceleration of the object (700, 800) or of the casing (10) .

11. An object (700, 800) of claim 10, **wherein:** said means (701, 702, 703, 707; 801, 802, 803, 804) for generating the control signal are adapted to generate the control signal for changing the casing (10) to a shock-absorbing state responsive to detecting an acceleration.

12. An object (700, 800) of claim 9, 10, or 11, **wherein:** said means (701, 702, 703, 707; 801, 802, 803, 804) for generating the control signal are responsive to a repetitively changing direction of acceleration, or shaking, of the casing (10), or of the object (700, 800).

13. An object (700, 800) according to any one of claims 9 to 12, **wherein:** said means (701, 702, 703, 707; 801, 802, 803, 804) for generating the control signal are adapted to generate the control signal for restoring the casing (10) to a normal state.

14. An object (800) according to any one of the preceding claims 8 to 13, **wherein:** the object (700, 800) is an electronic device and comprises a user interface (805) for changing settings according to which the control signal for changing a viscoelastic property of the second layer (203) is generated.

15. An object (800) of claim 14, **wherein:** the user interface (805) comprises means (901, 903, 905) adapted to:
-i) specify a time limit (Δt) for restoring the casing (10) into a normal state;
-ii) specify a shaking intensity (INT1) for restoring the casing (10) into a normal state;
-iii) enable (ON) or disable (OFF) the generation of the control signal; or
-iv) specify a threshold acceleration (INT2) for changing the casing (10) into a protecting state.

16. A method, especially executed as a computer program (804) in a processor unit, adapted to carry out the steps of:
-i) specifying a time limit (Δt) for restoring a casing (10) according to any one of claims 1 to 7, or an object (700, 800) according to any one of claims 8 to 15, into a normal state;
-ii) specifying a shaking intensity (INT1) for restoring a casing (10) according to any one of claims 1 to 7, or an object (700, 800) according to any one of claims 8 to 15, into a normal state;
-iii) enabling (ON) or disabling (OFF) the generation of the control signal for a casing (10) according to any one of claims 1 to 7, or for an object (700, 800) according to any one of claims 8 to 15;
-iv) specifying a threshold acceleration (INT2) for changing a casing (10) according to any one of claims 1 to 7, or an object (700, 800) according to any one of claims 8 to 15, into a protecting state; or
-v) responsive to a command received from a network element (1003) of a communications network (1000), or a sales agent (1005), changing a viscoelastic property of a casing (10) according to any one of claims 1 to 7, or an object (700, 800) according to any one of claims 8 to 15, for enabling using the object (700, 800).

## Patentansprüche

1. Verpackung (10), um einen Gegenstand (700, 800) zumindest teilweise zu bedecken, umfassend:
- eine elastische Außenschicht (201);
- eine zweite Schicht (203) unter der elastischen Außenschicht (201);
- eine Stützstruktur (205) unter der zweiten Schicht (203) und
- Mittel (207A, 207B; 501) zum Ändern einer viskoelastischen Eigenschaft der zweiten Schicht (203) als Reaktion auf ein Steuersignal.

2. Verpackung (10) nach Anspruch 1, wobei die zweite Schicht (203) Blasen (301; 401) umfaßt, deren viskoelastische Eigenschaft geändert werden kann.

3. Verpackung (10) nach Anspruch 1 oder 2, wobei die Mittel (207A, 207B; 501) zum Ändern einer viskoelastischen Eigenschaft der zweiten Schicht (203) dafür ausgelegt sind, mindestens einen Teil der zweiten Schicht (203) von einem gelförmigen Zustand zu einem festen Zustand oder von einem festen Zustand zu einem gelförmigen Zustand zu ändern.

4. Verpackung (10) nach einem der vorhergehenden Ansprüche, wobei die Verpackung (10) entfernt werden kann und Mittel (701; 803) zum Empfangen des Steuersignals umfaßt.

5. Verpackung (10) nach einem der vorhergehenden Ansprüche, wobei die Verpackung (10) Mittel (702; 703) zum Erzeugen des Steuersignals umfaßt.

6. Verpackung (10) nach einem der vorhergehenden Ansprüche, wobei das Material der zweiten Schicht (203) ein elektrorheologisches Fluid umfaßt, insbesondere ein für ein elektrisches Feld empfindliches Elastomer.

7. Verpackung (10) nach einem der vorhergehenden Ansprüche 1 bis 5, wobei das Material der zweiten Schicht (203) magneto-rheologisches Material, magnetisches Elastomer oder magnetisches Gel umfaßt.

8. Gegenstand (700, 800), der eine Verpackung (10) nach einem der vorhergehenden Ansprüche umfaßt.

9. Gegenstand (700, 800) nach Anspruch 8, der weiterhin Mittel (701, 702, 703, 707; 801, 802, 803, 804) zum Erzeugen eines Steuersignals zum Ändern einer viskoelastischen Eigenschaft der zweiten Schicht (203) der Verpackung (10) umfaßt.

10. Gegenstand (700, 800) nach Anspruch 9, wobei die Mittel (701, 702, 703, 707; 801, 802, 803, 804) zum Erzeugen des Steuersignals auf eine Beschleunigung des Gegenstands (700, 800) oder der Verpackung (10) reagieren.

11. Gegenstand (700, 800) nach Anspruch 10, wobei die Mittel (701, 702, 703, 707; 801, 802, 803, 804) zum Erzeugen des Steuersignals ausgelegt sind zum Erzeugen des Steuersignals zum Ändern der Verpackung (10) zu einem schockabsorbierenden Zustand als Reaktion auf das Detektieren einer Beschleunigung.

12. Gegenstand (700, 800) nach den Ansprüchen 9, 10 oder 11, wobei die Mittel (701, 702, 703, 707; 801, 802, 803, 804) zum Erzeugen des Steuersignals auf eine sich wiederholend ändernde Richtung der Beschleunigung oder des Schüttelns der Verpackung (10) oder des Gegenstands (700, 800) reagieren.

13. Gegenstand (700, 800) nach einem der Ansprüche 9 bis 12, wobei die Mittel (701, 702, 703, 707; 801, 802, 803, 804) zum Erzeugen des Steuersignals ausgelegt sind zum Erzeugen des Steuersignals zum Wiederherstellen der Verpackung (10) in einen normalen Zustand.

14. Gegenstand (800) nach einem der vorhergehenden Ansprüche 8 bis 13, wobei der Gegenstand (700, 800) eine elektronische Einrichtung ist und eine Benutzerschnittstelle (805) umfaßt zum Ändern von Einstellungen, entsprechend derer das Steuersignal zum Ändern einer viskoelastischen Eigenschaft der zweiten Schicht (203) erzeugt wird.

15. Gegenstand (800) nach Anspruch 14, wobei die Benutzerschnittstelle (805) Mittel (901, 903, 905) umfaßt, die für folgendes ausgelegt sind:
-i) Spezifizieren einer zeitlichen Grenze (Δt) zum Wiederherstellen der Verpackung (10) in einen normalen Zustand;
-ii) Spezifizieren einer Schüttelintensität (INT1) zum Wiederherstellen der Verpackung (10) in einen normalen Zustand;
-iii) Ermöglichen (EIN) oder Blockieren (AUS) der Erzeugung des Steuersignals oder
-iv) Spezifizieren einer Schwellwertbeschleunigung (INT2) zum Ändern der Verpackung (10) in einen schützenden Zustand.

16. Verfahren, insbesondere als ein Computerprogramm (804) in einer Prozessoreinheit ausgeführt, ausgelegt zum Ausführen der folgenden Schritte:
-i) Spezifizieren einer zeitlichen Grenze (Δt) zum Wiederherstellen einer Verpackung (10) nach einem der Ansprüche 1 bis 7, oder eines Objekts (700, 800) nach einem der Ansprüche 8 bis 15, in einen normalen Zustand;
-ii) Spezifizieren einer Schüttelintensität (INT1) zum Wiederherstellen einer Verpackung (10) nach einem der Ansprüche 1 bis 7, oder eines Objekts (700, 800) nach einem der Ansprüche 8 bis 15, in einen normalen Zustand;
-iii) Ermöglichen (EIN) oder Blockieren (AUS) der Erzeugung des Steuersignals für eine Verpackung (10) nach einem der Ansprüche 1 bis 7, oder für einen Gegenstand (700, 800) nach einem der Ansprüche 8 bis 15;
-iv) Spezifizieren einer Schwellwertbeschleunigung (INT2) zum Ändern einer Verpackung (10) nach einem der Ansprüche 1 bis 7, oder eines Gegenstands (700, 800) nach einem der Ansprüche 8 bis 15, in einen schützenden Zustand; oder
-v) Als Reaktion auf einen von einem Netzelement (1003) eines Kommunikationsnetzes (1000) oder eines Handelsvertreters (1005) empfangenen Befehl, Ändern einer viskoelastischen Eigenschaft einer Verpackung (10) nach einem der Ansprüche 1 bis 7, oder eines Gegenstands (700, 800) nach einem der Ansprüche 8 bis 15, um die Verwendung des Gegenstands (700, 800) zu ermöglichen.

## Revendications

1. Boîtier (10) pour recouvrir au moins partiellement un objet (700, 800) comprenant :
une couche (201) extérieure élastique ;
une deuxième couche (203) sous la couche (201) extérieure élastique ;
une structure (205) de support sous la deuxième couche (203) ; et
des moyens (207A, 207B ; 501) destinés à changer une propriété viscoélastique de la deuxième couche (203), en réponse à un signal de commande.

2. Boîtier (10) suivant la revendication 1, dans lequel la deuxième couche (203) comprend des taches (301 ; 401) dont une propriété viscoélastique peut être changée.

3. Boîtier (10) suivant la revendication 1 ou 2, dans lequel les moyens (207A, 207B ; 501) destinés à changer une propriété viscoélastique de la deuxième couche (203) sont conçus pour faire passer au moins une partie de la deuxième couche (203) d'un état de gel à un état solide ou d'un état solide à un état de gel.

4. Boîtier (10) suivant l'une quelconque des revendications précédentes, dans lequel le boîtier (10) est amovible et comprend des moyens (701 ; 803) destinés à recevoir le signal de commande.

5. Boîtier (10) suivant l'une quelconque des revendications précédentes, dans lequel le boîtier (10) comprend des moyens (702 ; 703) destinés à engendrer le signal de commande.

6. Boîtier (10) suivant l'une quelconque des revendications précédentes, dans lequel le matériau de la deuxième couche (203) comprend du fluide électro-rhéologique, en particulier un élastomère sensible aux champs électriques.

7. Boîtier (10) suivant l'une quelconque des revendications 1 à 5 précédentes, dans lequel le matériau de la deuxième couche (203) comprend un matériau magnéto-rhéologique, un élastomère magnétique ou un gel magnétique.

8. Objet (700, 800) comprenant un boîtier (10) suivant l'une quelconque des revendications précédentes.

9. Objet (700, 800) suivant la revendication 8 comprenant en outre, des moyens (701, 702, 703, 707 ; 801, 802, 803, 804) destinés à engendrer un signal de commande pour changer une propriété viscoélastique de la deuxième couche (203) du boîtier (10).

10. Objet (700, 800) suivant la revendication 9, dans lequel les moyens (701, 702, 703, 707 ; 801, 802, 803, 804) destinés à engendrer le signal de commande sont sensibles à une accélération de l'objet (700, 800) ou du boîtier (10).

11. Objet (700, 800) suivant la revendication 10, dans lequel les moyens (701, 702, 703, 707 ; 801, 802, 803, 804) destinés à engendrer le signal de commande sont conçus pour engendrer le signal de commande afin de faire entrer le boîtier (10) dans un état d'amortissement des chocs en réponse à la détection d'une accélération.

12. Objet (700, 800) suivant la revendication 9, 10 ou 11, dans lequel les moyens (701, 702, 703, 707 ; 801, 802, 803, 804) destinés à engendrer le signal de commande sont sensibles à un changement répété de direction d'accélération ou à des secousses du boîtier (10) ou de l'objet (700, 800).

13. Objet (700, 800) suivant l'une quelconque des revendications 9 à 12, dans lequel les moyens (701, 702, 703, 707 ; 801, 802, 803, 804) destinés à engendrer le signal de commande sont conçus pour engendrer le signal de commande pour ramener le boîtier (10) dans un état normal.

14. Objet (800) suivant l'une quelconque des revendications 8 à 13 précédentes, dans lequel l'objet (700, 800) est un dispositif électronique et comprend une interface (805) utilisateur pour modifier des réglages, suivant lesquels le signal de commande pour changer une propriété viscoélastique de la deuxième couche (203) est engendré.

15. Objet (800) suivant la revendication 14, dans lequel l'interface (805) utilisateur comprend des moyens (901, 903, 905) conçus pour :
i) spécifier une limite de temps (Δt) pour ramener le boîtier (10) dans un état normal ;
ii) spécifier une intensité de secousses (INT1) pour ramener le boîtier (10) dans un état normal ;
iii) activer (marche) ou désactiver (arrêt) la production du signal de commande ; ou
iv) spécifier un seuil d'accélération (INT2) pour faire entrer le boîtier (10) dans un état de protection.

16. Procédé, en particulier exécuté en tant que programme (804) informatique dans une unité de traitement, conçu pour exécuter les étapes consistant à :
i) spécifier une limite de temps (Δt) pour ramener un boîtier (10) suivant l'une quelconque des revendications 1 à 7 ou un objet (700, 800) suivant l'une quelconque des revendications 8 à 15, dans un état normal ;
ii) spécifier une intensité de secousses (INT1) pour ramener un boîtier (10) suivant l'une quelconque des revendications 1 à 7 ou un objet (700, 800) suivant l'une quelconque des revendications 8 à 15, dans un état normal ;
iii) activer (marche) ou désactiver (arrêt) la production du signal de commande pour un boîtier (10) suivant l'une quelconque des revendications 1 à 7 ou pour un objet (700, 800) suivant l'une quelconque des revendications 8 à 15 ;
iv) spécifier un seuil d'accélération (INT2) pour faire entrer un boîtier (10) suivant l'une quelconque des revendications 1 à 7 ou un objet (700, 800) suivant l'une quelconque des revendications 8 à 15, dans un état de protection ; ou
v) en réponse à une instruction reçue en provenance d'un élément (1003) de réseau d'un réseau (1000) de communication ou en provenance d'un agent (1005) de vente, changer une propriété viscoélastique d'un boîtier (10) suivant l'une quelconque des revendications 1 à 7 ou d'un objet (700, 800) suivant l'une quelconque des revendications 8 à 15, pour permettre l'utilisation de l'objet (700, 800).
